(19) **Europäisches Patentamt**
**European Patent Office**
**Office européen des brevets**

(11) **EP 2 760 129 B1**

(12) **EUROPÄISCHE PATENTSCHRIFT**

(45) Veröffentlichungstag und Bekanntmachung des Hinweises auf die Patenterteilung:
**14.11.2018 Patentblatt 2018/46**

(51) Int Cl.:
***H02P 29/032*** *(2016.01)*   ***E05F 15/695*** *(2015.01)*
***H02P 7/29*** *(2016.01)*   *E05F 11/48* *(2006.01)*

(21) Anmeldenummer: **13000347.8**

(22) Anmeldetag: **24.01.2013**

(54) **Stellvorrichtung für ein bewegbares Fahrzeugteil**

Positioning device for a moveable motor vehicle part

Dispositif de réglage pour une pièce de véhicule mobile

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.07.2014 Patentblatt 2014/31**

(60) Teilanmeldung:
**18199658.8**

(73) Patentinhaber: **Brose Fahrzeugteile GmbH & Co. Kommanditgesellschaft, Bamberg**
**96052 Bamberg (DE)**

(72) Erfinder:
• **Franek, Stefan**
 **96269 Buchenrod (DE)**

• **Thomann, Christian**
 **96138 Burgebrach (DE)**
• **Ruß, Detlef**
 **96237 Ebersdorf (DE)**
• **Kromer, Alex**
 **96135 Stegaurach (DE)**
• **Kalb, Roland**
 **96269 Rossach (DE)**
• **Übelein, Jörg**
 **96271 Grub am Forst (DE)**

(74) Vertreter: **FDST Patentanwälte**
**Nordostpark 16**
**90411 Nürnberg (DE)**

(56) Entgegenhaltungen:
**DE-A1- 3 731 469   DE-A1- 19 615 581**
**DE-A1- 19 823 376   DE-A1-102007 062 721**

**Beschreibung**

Die Erfindung bezieht sich auf eine Stellvorrichtung für ein bewegbares Fahrzeugteil, insbesondere auf einen elektrischen Fensterheber zur Verstellung einer Fensterscheibe in einem Kraftfahrzeug, beispielsweise auf einen Seilzug-Fensterheber.

Stellvorrichtungen werden in einem modernen Kraftfahrzeug für die automatische Verstellung von beweglichen Fahrzeugteilen unterschiedlicher Art eingesetzt. Neben den vorstehend erwähnten Fensterhebern, die der automatischen Verstellung von Fensterscheiben des Kraftfahrzeugs dienen, werden Stellvorrichtungen unter anderem auch zur Verstellung von Schiebedächern, Kraftfahrzeugtüren, Heckklappen, Spiegeln, Fahrzeugsitzen und Sitzteilen, Klappverdecken, etc. eingesetzt.

Eine Stellvorrichtung der vorstehend genannten Art umfasst üblicherweise einen elektrischen Stellmotor, eine Stellmechanik sowie eine Steuereinheit. Die Stellmechanik ist hierbei abtriebsseitig mit dem Stellmotor gekoppelt und dient zur Übertragung der von dem Stellmotor erzeugten Verstellkraft auf das zu verstellende Fahrzeugteil, um dieses entlang eines vorgegebenen Verstellweges zu bewegen.

Die Stellmechanik setzt sich in der Regel zusammen aus einem Getriebe, das direkt mit der Motorwelle des Stellmotors gekoppelt ist, sowie aus Mitteln zur Kraft- und Bewegungsübertragung zwischen dem Getriebe und dem zu verstellenden Fahrzeugteil. Bei einem Seilzugfensterheber sind diese Mittel zur Kraft- und Bewegungsübertragung beispielsweise durch ein Seilzugsystem mit Wickeltrommel, Umlenkrollen, Seilzug und Mitnehmer zur Kopplung des Seilzugs mit der Fahrzeugscheibe gebildet.

Der Stellmotor und die Stellmechanik einer solchen Stellvorrichtung müssen einerseits stark bzw. stabil genug ausgelegt sein, um die im Betrieb der Stellvorrichtung zu erwartenden Belastungen über die veranschlagte Lebensdauer der Stellvorrichtung zuverlässig und beschädigungsfrei aufnehmen zu können. Andererseits sind einer Überdimensionierung der Komponenten einer Stellvorrichtung aus Gründen der Herstellungskosten und des zur Verfügung stehenden Bauraums in der Regel enge Grenzen gesetzt. Die Komponenten einer Stellvorrichtung werden deshalb üblicherweise hinsichtlich der erbringbaren Leistung und Kräfte sowie der Belastbarkeit eng auf die im Einzelfall jeweils konkret zu erwartenden Einsatzbedingungen ausgelegt.

Aus diesem Grund ist es häufig erforderlich, für verschiedene Fahrzeugtypen oder sogar verschiedene Ausstattungsvarianten ein und desselben Fahrzeugtyps unterschiedliche Bauformen einer bestimmten Stellvorrichtung, beispielsweise eines Seilzug-Fensterhebers, zu konzipieren. Hersteller von Fahrzeugkomponenten fertigen daher oftmals Baureihen, die jeweils mehrere Bauformen eines bestimmten Stellvorrichtungtyps umfassen, wobei sich die einzelnen Bauformen einer solchen Baureihe durch die Belastbarkeit der eingesetzten Komponenten unterscheiden.

Für die unterschiedlichen Bauformen einer solchen Baureihe werden üblicherweise auch unterschiedliche Stellmotoren vorgesehen, die hinsichtlich ihrer Abtriebsleistung an die Auslegung der zugehörigen Stellmechanik angepasst sind. Dies macht es erforderlich, Stellmotoren in einem abgestuften System von Leistungsklassen zu entwickeln, was zu einer Stückzahlsplittung führt und entsprechend hohe Kosten verursacht.

Aus DE 197 11 979 A1 ist ein Verfahren zur Steuerung einer Stellvorrichtung für ein bewegbares Fahrzeugteil bekannt. Hierbei wird zumindest in einem Teilbereich des Verstellweges die Verstellkraft auf einen von dem Verstellweg abhängigen Grenzwert begrenzt. Bei Überschreitung dieses Grenzwertes wird ein zu der Verstellkraft proportionaler Parameter, insbesondere der Motorstrom, auf einen dem Grenzwert entsprechenden Wert geregelt. Während dieser Regelphase wird ein mit der Dynamik der Stellvorrichtung korrelierter Parameter, insbesondere die Drehzahl überwacht und in einer Steuer- und Regelelektronik bewertet. Aus dieser Bewertung wird das weitere Steuerungs- und Regelungsverhalten generiert. Insbesondere wird dabei die Stellvorrichtung abgeschaltet oder reversiert, wenn die Drehzahl nach einer vorgegebenen Zeitspanne nach dem Beginn der Regelungsphase unter einen festgelegten Grenzwert abgefallen ist. Der für die Verstellkraft stellwegabhängig vorgegebene Grenzwert ist dabei derart gewählt, dass er die normale, d. h. im Normalbetrieb zu erwartende Verstellkraft um eine vorgegebene Überschusskraft überschreitet. Die Begrenzung der Überschusskraft dient hierbei zur Realisierung eines effektiven Einklemmschutzes. Die Überschusskraft ist deshalb so bemessen, dass sie an jedem Ort des Verstellweges auch schärfsten Einklemmschutzbedingungen genügt. Insbesondere ist sie so bemessen, dass durch das zu verstellende Fahrzeugteil eine Kraft von maximal 100 N auf ein eingeklemmtes Körperteil oder einen eingeklemmten Gegenstand ausgeübt werden kann.

Eine Stellvorrichtung nach dem Oberbegriff des Anspruchs 1 ist aus DE 198 23 376 A1 bekannt. Bei einer weiteren, aus DE 196 15 581 A1 bekannten Stellvorrichtung wird anstelle einer Drehzahlregelung eine Drehmomentbegrenzung eingesetzt. Aus DE 37 31 469 ist ferner grundsätzlich bekannt, bei einem Asynchronmotor mit weicher Drehmoment-Drehzahl-Charakteristik eine Drehzahlregelung in Kombination mit einer Drehmomentbegrenzung einzusetzen.

Der Erfindung liegt die Aufgabe zugrunde, eine besonders rationell herstellbare Stellvorrichtung für ein bewegbares Fahrzeugteil anzugeben. Der Erfindung liegt ferner die Aufgabe zugrunde, ein besonders rationelles Verfahren zur Herstellung einer mehrere Bauformen umfassenden Baureihe von Stellvorrichtungen für ein bewegliches Fahrzeugteil anzugeben.

Bezüglich einer Stellvorrichtung für ein bewegbares Fahrzeugteil wird die Aufgabe erfindungsgemäß gelöst durch die Merkmale des Anspruchs 1. Vorteilhafte und teils für sich erfinderische Ausgestaltungen und Weiterentwicklungen der Erfindung sind Gegenstand der Unteransprüche.

Die erfindungsgemäße Stellvorrichtung umfasst einen elektrischen Stellmotor sowie eine Stellmechanik, die abtriebsseitig mit dem Stellmotor gekoppelt ist und zur Bewegung des zu verstellenden Fahrzeugteils unter Wirkung eines von dem Stellmotor erzeugten Motordrehmoments dient. Die Stellvorrichtung umfasst weiterhin eine Steuereinheit zur Ansteuerung des Stellmotors mit einem Motorstrom.

Die Steuereinheit ist hierbei-schaltungs-und/oder programmtechnisch - dazu eingerichtet, das Motordrehmoment durch Begrenzung des Motorstroms auf einen vorgegebenen Drehmomentgrenzwert zu begrenzen. Zusätzlich ist die Steuereinheit-schaltungs- und/oder programmtechnisch - dazu eingerichtet, die Motordrehzahl des Stellmotors durch Regelung der- dem Motorstrom zugrundeliegenden - Motorspannung auf einen Drehzahlsollwert zu regeln (Drehzahl-oder Frequenzregelung).

Als "Motordrehmoment" wird das von dem Stellmotor über die Motorwelle auf die Stellmechanik ausgeübte Drehmoment bezeichnet. Als "Motordrehzahl" wird die Drehzahl der Motorwelle bezeichnet.

Die Kombination der Drehmomentbegrenzung mit einer Drehzahlregelung erlaubt es, unzulässige Arbeitspunkte des Stellmotors, die aufgrund zu hoher Motordrehmomente oder Motordrehzahlen zu einer sofortigen oder allmählichen Schädigung der Stellmechanik führen würden, bereits durch die Motoransteuerung auszuschließen. Daher erübrigt sich bei der erfindungsgemäßen Stellvorrichtung die Notwendigkeit, den Stellmotor hinsichtlich seiner Motorkennlinie an die Belastbarkeit der Stellmechanik anzupassen. Vielmehr kann auch ein leistungsmäßig stark überdimensionierter Stellmotor im Rahmen der Stellvorrichtung eingesetzt werden, ohne Schäden an der Stellmechanik befürchten zu müssen.

Vorzugsweise ist dabei der Stellmotor derart ausgelegt, dass er bei kontinuierlicher (also zeitlich ununterbrochener, ungepulster) Ansteuerung mit einer Maximalbetriebsspannung ein Blockdrehmoment aufweist, das ein Maximallastmoment der Stellmechanik überschreitet. Der Stellmotor ist mit anderen Worten im Vergleich zu der Lastaufnahmefähigkeit der Stellmechanik überdimensioniert, so dass er ohne Drehmomentbegrenzung die Stellmechanik im Blockzustand sofort oder allmählich schädigen würde.

Als "Maximalbetriebsspannung" ist hierbei der maximale Wert der Motorspannung bezeichnet, dem die Stellvorrichtung im bestimmungsgemäßen Betrieb ausgesetzt sein kann. Vorzugsweise ist die Stellvorrichtung für die Versorgung durch eine gewöhnliche Fahrzeugbatterie mit einer Nennspannung von 12Volt vorgesehen.

Die Stellvorrichtung ist hierbei hinsichtlich der Maximalbetriebsspannung auf den höchsten Spannungswert ausgelegt, der im Batteriestromkreis unter regulären Bedingungen vorliegen kann, beispielsweise auf 16 Volt.

Als "Blockdrehmoment" ist derjenige Drehmomentwert der Drehmoment-Drehzahl-Kennlinie des Stellmotors bezeichnet, der sich bei gegebener Motorspannung und blockiertem Motor (d.h. bei Motorstillstand oder, mit anderen Worten, einem Drehzahlwert von Null) einstellt.

Als "Maximallastmoment" der Stellmechanik ist der maximale Wert des Motordrehmomentes bezeichnet, der nach der mechanischen Auslegung der Stellmechanik von dieser ohne Schädigung aufgenommen werden kann. Das Maximallastmoment der Stellmechanik ist insbesondere durch denjenigen Wert des Motordrehmomentes definiert, bei dem die Stellmechanik gerade noch einen Heat-Creep-Test besteht. Als Heat-Creep-Test wird hierbei ein standardisierter Laborversuch verstanden, bei dem eine festgelegte Anzahl von Testexemplaren der Stellvorrichtung für ein vorgesehenes (lebensdaueräquivalentes) Zeitintervall von beispielsweise 1000 Stunden dauerhaft der höchsten spezifizierten Betriebstemperatur (beispielsweise 80°C) und dabei für eine festgelegte Anzahl von beispielsweise 125 Lastzyklen dem jeweiligen Drehmoment ausgesetzt wird. Der Heat-Creep-Test gilt als bestanden, wenn alle Testexemplare die Drehmomentbeaufschlagung ohne Funktionsverlust (z.B. Bruch, Verklemmung oder Schwergängigkeit) überleben.

Um eine Überlastung der Stellmechanik durch ein unzulässig hohes Motordrehmoment sicher zu vermeiden, ist der Drehmomentgrenzwert in der Steuereinheit zweckmäßigerweise derart vorgegeben, dass er das Maximallastmoment der Stellmechanik nicht überschreitet. Mit anderen Worten ist der Drehmomentgrenzwert derart vorgegeben, dass er dem Maximallastmoment der Stellmechanik entspricht oder dieses - insbesondere geringfügig - unterschreitet. In bevorzugter Dimensionierung ist der Drehmomentgrenzwert insbesondere auf etwa 90% des Maximallastmoments der Stellmechanik festgelegt.

Im Rahmen der Erfindung kann der Drehmomentgrenzwert fest (zeitlich konstant und unveränderbar) vorgegeben sein. In einer bevorzugten Ausbildung der Erfindung ist alternativ hierzu der Drehmomentgrenzwert variabel als Funktion eines Maßes für die Stellposition des zu bewegenden Fahrzeugteils (Stellpositionsmaß) oder als Funktion der Zeit vorgegeben. Insbesondere ist der Drehmomentgrenzwert analog zu dem in DE 197 11 979 A1 beschriebenen Verfahren derart festgelegt, dass er den typischen stellwegabhängigen Drehmomentverlauf der Stellvorrichtung im eingebauten Zustand zuzüglich eines vorgegebenen Überschussdrehmoments entspricht. Abweichend von DE 197 11 979 A1 wird der Drehmomentgrenzwert allerdings unter der zusätzlichen Bedingung bestimmt, dass er das Maximallastmoment der Stellmechanik an keiner Stellposition überschreitet. Insbesondere wird im Rahmen der Erfindung eine Variation des Drehmomentgrenzwertes nur bis zu einem das Maximallastmoment der Stellmechanik geringfügig unterschreitenden Wert, z.B. 90% des Maximallastmomentes zugelassen.

Zusätzlich oder alternativ hierzu ist der Stellmotor vorzugsweise derart ausgelegt, dass er bei kontinuierlicher Ansteuerung mit der Maximalbetriebsspannung eine Leerlaufdrehzahl aufweist, die eine Maximaldrehzahl des Stellmotors oder eine Maximaldrehzahl der Stellmechanik überschreitet. Mit anderen Worten ist der Stellmotor hinsichtlich seiner elektrischen Leistungsfähigkeit gegenüber seiner eigenen mechanischen Auslegung und/oder der mechanischen Auslegung der Stellmechanik überdimensioniert, so dass er ohne die Frequenzregelung im Leerlauf oder bei geringer Belastung sich selbst oder die Stellmechanik schädigen würde.

Der Begriff "Leerlaufdrehzahl" bezeichnet hierbei in der Drehmoment-Drehzahl-Kennlinie des Stellmotors denjenigen Drehzahlwert, der sich bei gegebener Motorspannung im Leerlauf des Stellmotors, d.h. bei einem Motordrehmoment des Wertes Null einstellt.

Die "Maximaldrehzahl" des Stellmotors bezeichnet denjenigen maximalen Wert der Motordrehzahl, den der Läufer des Stellmotors und die Lager der Motorwelle gerade noch ohne Gefahr einer Beschädigung aufnehmen können. Ebenso bezeichnet die "Maximaldrehzahl" der Stellmechanik denjenigen maximalen Wert der Motordrehzahl, bei dem gerade noch keine Beschädigung der Stellmechanik zu befürchten ist. Je nach Auslegung des Stellmotors und der Stellmechanik können die Maximaldrehzahl des Stellmotors und die Maximaldrehzahl der Stellmechanik gleich oder verschieden sein. Die Maximaldrehzahl des Stellmotors und die Maximaldrehzahl der Stellmechanik werden im Rahmen der Erfindung durch Berechnung oder durch Testreihen bestimmt. Sie sind insbesondere durch diejenige Drehzahl bestimmt, für die der Stellmotor bzw. die Stellmechanik gemäß der zugehörigen Datenblätter spezifiziert sind.

Um eine Beschädigung des Stellmotors oder der Stellmechanik durch unzulässig hohe Motordrehzahlen sicher auszuschließen, ist der Drehzahlsollwert in der Steuereinheit zweckmäßigerweise derart vorgegeben, dass er die Maximaldrehzahl des Stellmotors und die Maximaldrehzahl der Stellmechanik nicht überschreitet. Mit anderen Worten ist der Drehzahlsollwert derart gewählt, dass er der Maximaldrehzahl des Stellmotors oder - wenn diese niedriger ist - der Maximaldrehzahl der Stellmechanik entspricht oder diese geringfügig unterschreitet. Beispielsweise ist der Drehzahlsollwert derart gewählt, dass er etwa 90% der Maximaldrehzahl der am schwächsten ausgelegten Komponente der Stellvorrichtung entspricht.

Vorzugsweise ist die Steuereinheit - programm- und/oder schaltungstechnisch - dazu eingerichtet, sowohl zur Begrenzung des Motordrehmoments als auch zur Regelung der Motordrehzahl die Motorspannung als pulsweitenmoduliertes Pulssignal zu erzeugen. Sowohl das Motordrehmoment als auch die Motordrehzahl werden somit durch entsprechende Pulsung der Motorspannung eingestellt.

Bei der vorstehend beschriebenen Stellvorrichtung handelt es sich bevorzugt um einen elektromotorischen Fensterheber zur Verstellung einer Fensterscheibe eines Kraftfahrzeugs, insbesondere um einen Seilzugfensterheber. Abweichend hiervon kann die Stellvorrichtung im Rahmen der Erfindung aber auch zur Verstellung beliebiger anderer Fahrzeugteile im Kraftfahrzeug vorgesehen sein, insbesondere zur Verstellung einer Fahrzeugtür, Heckklappe, eines Schiebedachs oder Fahrzeugverdecks, eines Fahrzeugsitzes oder Sitzteils, etc.

Nachfolgend wird ein Ausführungsbeispiel der Erfindung anhand einer Zeichnung näher erläutert. Darin zeigen:

Fig. 1 in einem schematischen Blockschaltbild einen elektrischen Fensterheber zur Verstellung einer Kraftfahrzeug-Seitenscheibe mit einem elektrischen Stellmotor, einer Stellmechanik zur Übertragung des von dem Stellmotor erzeugten Drehmoments auf die Fahrzeugscheibe sowie mit einer Steuereinheit zur Ansteuerung des Stellmotors mit einem Motorstrom, und

Fig. 2 in einem schematischen Blockschaltbild den Aufbau der Steuereinheit gemäß Fig. 1,

Fig. 3 in einem schematischen Diagramm der Motordrehzahl gegen das Motordrehmoment den typischen Verlauf der Drehmoment-DrehzahlKennlinie des Stellmotors für verschiedene Beträge der Motorspannung, und

Fig. 4 in einem schematischen Diagramm des Motordrehmoments gegen die Stellposition den zu erwartenden Verlauf des Motordrehmoments während eines Stellvorgangs und einen der Steuereinheit vorgegebenen Drehmomentgrenzwert.

Einander entsprechende Teile und Größen sind in allen Figuren stets mit gleichen Bezugzeichen versehen.

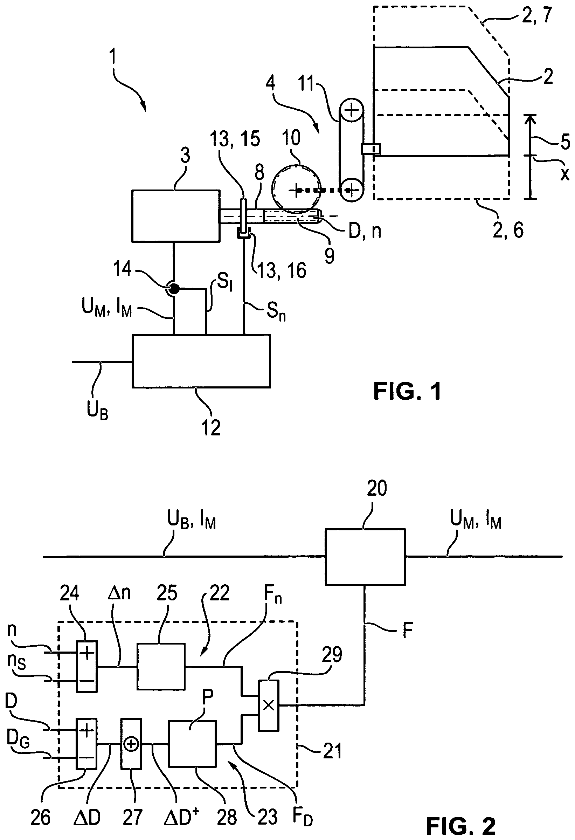

Fig. 1 zeigt schematisch eine Stellvorrichtung in Form eines (Seilzug-)Fensterhebers 1 für eine (Fahrzeug-)Fensterscheibe 2 eines Kraftfahrzeugs.

Der Fensterheber 1 umfasst einen elektrischen Stellmotor 3, der über eine Stellmechanik 4 derart mit der Fensterscheibe 2 gekoppelt ist, dass die Fensterscheibe 2 durch den Stellmotor 3 entlang eines Verstellweges 5 zwischen zwei Endstellungen, nämlich einer Öffnungsstellung 6 und einer Schließstellung 7 reversibel verfahrbar ist.

Fig. 1 zeigt die Fensterscheibe 2 in der Öffnungsstellung 6 und der Schließstellung 7 jeweils mit gestrichelter Umrisslinie. Mit durchgezogener Umrisslinie ist die Fensterscheibe 2 in einer mittleren Stellposition x zwischen den beiden Endstellungen dargestellt.

Die Stellmechanik 4 umfasst eine auf einer Motorwelle 8 des Stellmotors 3 aufgebrachte Antriebsschnecke 9, die mit einem Schneckenrad 10 kämmt. Die Stellmechanik 4 umfasst des Weiteren einen - in Fig. 1 nur stark vereinfacht angedeuteten - Seilzug 11, der mit dem Schneckenrad 10 über (nicht näher dargestellte) Getriebeteile und eine Wickeltrommel gekoppelt ist. Mittels eines Mitnehmers ist der Seilzug 11 wiederum mit der Fensterscheibe 2 gekoppelt.

Die Stellvorrichtung 1 umfasst weiterhin eine Steuereinheit 12, einen Drehstellungssensor 13 sowie einen Stromsensor 14. Der Drehstellungssensor 13 umfasst einen auf der Motorwelle 8 drehfest aufgebrachten, mehrpoligen Ringmagneten 15 sowie eine mit diesem zusammenwirkenden Hall-Sensor 16.

Zur Durchführung eines Stellvorgangs steuert die - ihrerseits aus einer Fahrzeugbatterie mit einer Batteriespannung $U_B$ versorgte - Steuereinheit 12 den Stellmotor 3 mit einem Motorstrom $I_M$ an, aufgrund dessen der Stellmotor 3 über die Motorwelle 8 ein Motordrehmoment D auf die Stellmechanik 4 ausübt. Durch den Stromsensor 14 wird hierbei ein zur Stromstärke des Motorstroms $I_M$ proportionales Strommesssignal $S_I$ erzeugt und der Steuereinheit 12 als Eingangsgröße zugeführt.

Bei Drehung der Motorwelle 8 erzeugt der damit gekoppelte Ringmagnet 15 im Zusammenwirkung mit dem Hall-Sensor 16 ein gepulstes Drehzahlmesssignal $S_n$, dessen Pulsrate proportional zu der (Motor-)Drehzahl n ist und führt dieses Drehzahlmesssignal $S_n$ der Steuereinheit 12 als weitere Eingangsgröße zu.

Die Steuereinheit 12 berechnet aus dem Strommesssignal $S_I$ anhand der hinterlegten Strom-Drehmoment-Kennlinie des Stellmotors 3 fortlaufend den (Ist-)Wert des vom Stellmotor 3 erzeugten (Motor-)Drehmoments D sowie anhand des Drehzahlmesssignals $S_n$ den (Ist-)Wert der Motordrehzahl n.

Der Aufbau der Steuereinheit 12 ist in Fig. 2 näher dargestellt. Aus dieser Darstellung ist erkennbar, dass die Steuereinheit 12 ein PWM-Schaltmodul 20 sowie einen Regelkreis 21 zur Ansteuerung des PWM-Schaltmoduls 20 aufweist. Der Regelkreis 21 umfasst zwei Signalflusszweige, nämlich einen Frequenzregelzweig 22 und einen Drehmomentbegrenzungszweig 23.

In dem Frequenzregelzweig 22 wird der Istwert der Drehzahl n in einem Differenzglied 24 fortlaufend mit einem (Drehzahl-)Sollwert $n_S$ verglichen. Das Differenzglied 24 erzeugt hierbei ein Differenzsignal $\Delta n$, das zu der Differenz des Sollwerts $n_S$ von der Drehzahl n proportional ist, und gibt dieses Differenzsignal $\Delta n$ an einen nachgeschalteten Proportional-Integral-Regler (nachfolgend kurz PI-Regler 25) ab. Der PI-Regler 25 gibt in Abhängigkeit des zeitlichen Verlaufs des Differenzsignals $\Delta n$ ein - beispielsweise zwischen den Werten 0 und 1 variierendes - Stellsignal $F_n$ aus.

In dem Drehmomentbegrenzungszweig 23 wird der aktuelle (Ist-)Wert des Drehmoments D in einem Differenzglied 26 fortlaufend mit einem vorgegebenen (Drehmoment-)Grenzwert $D_G$ verglichen. Das Differenzglied 26 erzeugt hierbei ein Differenzsignal $\Delta D$, das zu der Differenz des Grenzwerts $D_G$ von dem Drehmoment D proportional ist, und gibt dieses Differenzsignal $\Delta D$ an ein nachgeschaltetes Filtermodul 27 weiter. Das Filtermodul 27 hat die Eigenschaft, dass es negative Werte des Differenzsignals $\Delta D$ unterdrückt. Ein von dem Filtermodul 27 ausgegebenes modifiziertes Differenzsignal $\Delta D^+$ hat somit stets den Wert des Differenzsignals $\Delta D$, sofern der aktuelle Istwert des Drehmoments D den Grenzwert $D_G$ übersteigt ($D > D_G$) und somit der Wert des Differenzsignals $\Delta D$ positiv ist. Ansonsten ($D \leq D_G$) hat das modifizierte Differenzsignal $\Delta D^+$ den Wert 0. Das Differenzsignal $\Delta D^+$ wird einem an einen nachgeschalteten Proportionalregler (nachfolgend kurz P-Regler 28) zugeführt. Der P-Regler 28 erzeugt ein zweites Stellsignal $F_D$, das negativ proportional zu dem modifizierten Differenzsignal $\Delta D^+$ ist:

$$F_D = \begin{cases} 1 - P \cdot \Delta D^+ & \text{wenn} \quad \Delta D^+ < \dfrac{1}{P} \\ 0 & \text{sonst} \end{cases} \qquad \text{Glg. 1}$$

Das Stellsignal $F_D$ hat somit den Wert 1, wenn das Differenzsignal $\Delta D^+$ den Wert 0 hat und sinkt mit zunehmendem Wert des Differenzsignals $\Delta D^+$ von dem Wert 1 bis auf den Wert 0 ab. Der Regelparameter P in Glg. 1 ist hierbei durch Berechnung oder Versuche bestimmt und dem P-Regler 28 als Konstante vorgegeben.

Optional ist vorgesehen, dass der Regelparameter P durch den Fahrzeughersteller geändert werden kann. Gleiches gilt für die - hier nicht näher bezeichneten - Regelparameter des PI-Reglers 25.

Die Stellsignale $F_n$ und $F_D$ werden in einem Multiplikationsglied 29 des Regelkreises 21 multipliziert. Ein hieraus resultierendes (Gesamt-)Stellsignal F wird von dem Regelkreis 21 an das PWM-Schaltmodul 20 ausgegeben.

Das PWM-Schaltmodul 20 erzeugt aus der zugeführten Batteriespannung $U_B$ ein pulsweitenmoduliertes Spannungssignal, das als Motorspannung $U_M$ zur Erzeugung des Motorstroms $I_M$ an den Stellmotor 3 angelegt wird. Das PWM-Schaltmodul 20 erzeugt die Motorspannung $U_M$ hierbei mit einer Pulsweite, die dem zwischen den Werten 0 und 1 variierenden Wert des Stellsignal F entspricht. Als Pulsweite wird hierbei das Verhältnis der Pulsdauer zu der Taktzeit in jedem Takt der pulsweitenmodulierten Motorspannung $U_M$ bezeichnet.

Die Motorspannung $U_M$ wird somit durch das PWM-Schaltmodul 20 als kontinuierliche (zeitlich unterbrochene) Gleichspannung mit einem der Batteriespannung $U_B$ entsprechenden Wert ($U_M = U_B$) erzeugt, wenn das Stellsignal F den Wert 1 hat, während die Motorspannung $U_M$ als Null-Spannung ($U_M = 0$) erzeugt wird, wenn das Stellsignal F den Wert 0 hat.

Der Regelkreis 21 ist vorzugweise als Software implementiert, die auf einem Mikrocontroller der Steuereinheit 12 lauffähig implementiert ist. Der Regelkreis 21 kann alternativ aber auch durch einen digitalen oder anlogen elektronischen Hardware-Schaltkreis gebildet sein.

Durch den Frequenzregelungszweig 22 des Regelkreises 21 werden das Stellsignal F und damit die zeitgemittelte Motorspannung $U_M$ derart verändert, dass die Drehzahl n des Stellmotors 3 weitestmöglich an den Sollwert $n_s$ angeglichen wird.

Durch den Drehmomentenbegrenzungszweig 23 des Regelkreises 21 werden das Stellsignal F - und damit der Motorstrom $I_M$ - erniedrigt, wenn das Drehmoment D des Stellmotors 3 den Grenzwert $D_G$ überschreitet, um das Drehmoment D auf den Grenzwert $D_G$ zu reduzieren. Somit bewirkt der Regelkreis 21 eine Frequenzregelung des Stellmotors 3 in Kombination mit einer Dremomentbegrenzung.

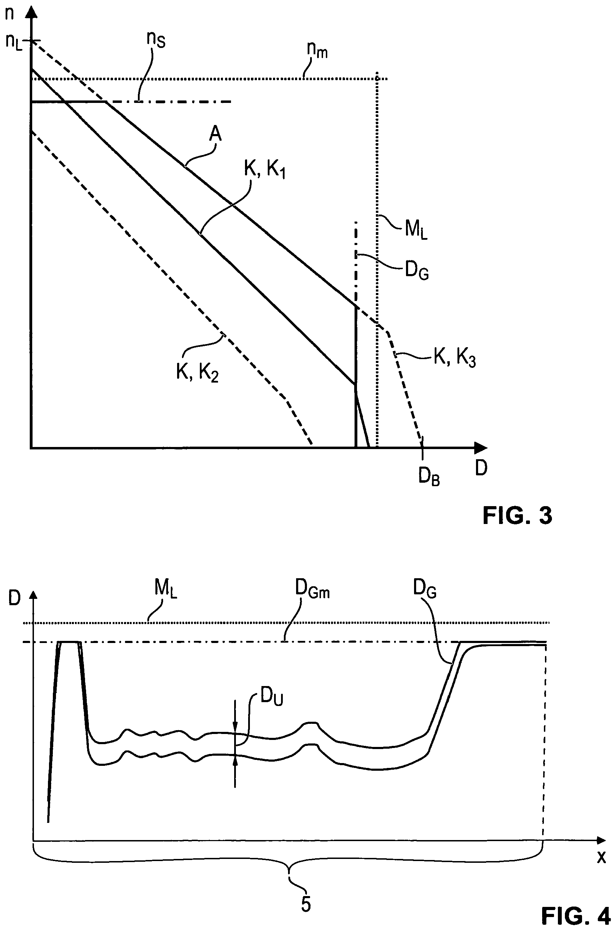

Diese Wirkung ist in Fig. 3 anhand der schematisch dargestellten Drehzahl-Drehmoment-Kennlinie K des Stellmotors 3 bei konstanter Motorspannung $U_M$ in einem Diagramm der Drehzahl n gegen das Drehmoment D dargestellt. Fig. 3 zeigt hierbei den Verlauf der Kennlinie K für drei Beträge der Motorspannung $U_M$. Hierbei wird stets von einem kontinuierlichen (ungepulsten) Betrieb des Stellmotors 3 ausgegangen, so dass die Motorspannung $U_M$ der Batteriespannung $U_B$ entspricht ($U_M = U_B$). So ist in Fig. 3 mit durchgezogener Linie ein Verlauf $K_1$ der Kennlinie K bei der Nennspannung der Fahrzeugbatterie ($U_M = U_B = 12V$) angetragen. Mit gestrichelten Linien ist dagegen der Verlauf $K_2$ der Kennlinie K bei einer Minimalbetriebsspannung des Stellmotors 3 ($U_M = U_B = 9V$) bzw. der Verlauf $K_3$ der Kennlinie K bei einer Maximalbetriebsspannung des Stellmotors 3 ($U_M = U_B = 16V$) angetragen.

Aus der Fig. 3 ist zu erkennen, dass die Kennlinie K für alle Werte der Motorspannung stets monoton abfällt. Den höchsten Drehzahlwert erreicht der Stellmotor 3 demnach bei verschwindendem Drehmoment D (D = 0). Dieser Punkt der Kennlinie K ist auch als Leerlaufdrehzahl $n_L$ bezeichnet. Das größte Drehmoment D übt der Stellmotor dagegen bei verschwindender Drehzahl (n = 0) aus. Dieser Punkt der Kennlinie K ist nachfolgend als Blockmoment $D_B$ bezeichnet. In Fig. 3 sind die Leerlaufdrehzahl $n_L$ und das Blockmoment $D_B$ nur für den der Maximalbetriebsspannung entsprechenden Verlauf $K_3$ der Kennlinie K eingetragen. Nur von diesem Fall wird nachfolgend ausgegangen. Die Größen $n_L$ und $D_B$ bezeichnen somit die Leerlaufdrehzahl bzw. das Blockmoment für den Fall, dass die Motorspannung $U_M$ der Maximalbetriebsspannung von 16Volt entspricht.

In Fig. 3 sind mit gepunkteten Linien weiterhin das Maximallastmoment $M_L$ der Stellmechanik 4 und die Maximaldrehzahl $n_m$ der am schwächsten ausgelegten Komponente des Fensterhebers 1 angetragen. Im Folgenden wird exemplarisch davon ausgegangen, dass die Größe $n_m$ die Maximaldrehzahl der Stellmechanik 4 bezeichnet, und dass der Stellmotor 3 für eine gleiche oder höhere Maximaldrehzahl ausgelegt ist.

Anhand der Kennlinie K ist hierbei zu erkennen, dass der Stellmotor 3 hinsichtlich seiner elektrischen Antriebsleistung im Vergleich zu der mechanischen Auslegung der Stellmechanik 4 überdimensioniert ist, insofern als zumindest bei einer der Maximalbetriebsspannung entsprechenden Motorspannung $U_M$ (gemäß dem Verlauf $K_3$ der Kennlinie K) das Blockmoment $D_B$ des Stellmotors 3 das Maximallastmoment $M_L$ der Stellmechanik 4 übersteigt. Zusätzlich übersteigt in diesem Fall auch die Leerlaufdrehzahl $n_L$ die Maximaldrehzahl $n_M$ der Stellmechanik 4.

Um eine Schädigung der Stellmechanik 4 bei abtriebsseitig blockierter Stellmechanik 4 zu vermeiden, ist der Drehmomentgrenzwert $D_G$ gemäß Fig. 3 derart gewählt, dass er das Maximallastmoment $M_L$ der Stellmechanik 4 geringfügig unterschreitet. Beispielsweise ist der Grenzwert $D_G$ auf 90% des Maximallastmomentes $M_L$ gesetzt.

Ebenso ist, um eine Beschädigung der Stellmechanik 4 bei geringer Belastung des Stellmotors 3 (Quasi - Leerlauf) zu vermeiden, der Drehzahlsollwert $n_S$ geringfügig kleiner gewählt als die Maximaldrehzahl $n_L$ der Stellmechanik 4. Beispielsweise ist der Sollwert $n_S$ auf 90% der Maximaldrehzahl $n_L$ festgesetzt.

Im Betrieb des Stellmotors 3 wird der Arbeitspunkt des Stellmotors 3 daher durch den Regelkreis 21 auf einer in Fig. 3 mit durchgezogener Linie eingetragene Arbeitspunktlinie A gehalten, die durch die Solldrehzahl $n_S$, den Drehmomentgrenzwert $D_G$ und ggf. den dazwischenliegenden Teil des Verlaufs $K_3$ der Kennlinie K gebildet ist.

Abweichend von dem anhand von Fig. 3 dargestellten Fall, in dem der Drehmomentgrenzwert $D_G$ konstant vorgegeben ist, wird der Drehmomentgrenzwert $D_G$ in einer anhand von Fig. 4 dargestellten Variante des Fensterhebers 1 in Abhängigkeit der Stellposition x nach dem grundsätzlich in DE 197 11 979 A1 beschriebenen Verfahren variiert. Anstelle der tatsächlichen Stellposition x kann hierbei die funktionale Abhängigkeit des Drehmomentgrenzwertes $D_G$ auch in Abhängigkeit einer beliebigen anderen, mit der Stellposition x korrelierenden Größe definiert sein, beispielsweise in Abhängigkeit des Gesamtumdrehungswinkels der Motorwelle 8 während eines Stellvorgangs.

Fig. 4 zeigt die typische Abhängigkeit des Drehmomentgrenzwerts $D_G$ während eines Stellvorgangs in Gegenüberstellung zu dem im ordnungsgemäßen Betrieb des Fensterhebers 1 zu erwartenden Verlauf des Drehmoments D. Zu erkennen ist in Fig. 4 dabei insbesondere, dass der Grenzwert $D_G$ gemäß der Lehre der DE 197 11 979 A1 über den weitesten Bereich des Stellwegs 5 durch den zu erwartenden Verlauf des Drehmoments D zuzüglich einer vorgegebenen Überschusskraft $D_U$ gebildet ist. Abweichend von dem in DE 197 11 979 A1 beschriebenen Verfahren wird der Grenzwert $D_G$ aber bei dem Fensterheber 1 stets auf einen Maximalwert $D_{Gm}$ begrenzt, der das Maximallastmoment $M_L$ der Stellmechanik 4 nicht überschreitet oder dieses - wie in Fig. 4 dargestellt - geringfügig unterschreitet. Aufgrund dieser Begrenzung des Grenzwertes $D_G$ bewirkt der Regelkreis 21, dass auch der tatsächliche Verlauf des Drehmoments D den Maximalwert $D_{Gm}$ nicht überschreitet.

Das vorstehend beschriebene Bauprinzip wird vorzugsweise auf eine Baureihe von verschiedenen Bauformen des Fensterhebers 1 angewendet, wobei sich die einzelnen Bauformen dieser Baureihe durch die mechanische Auslegung der jeweiligen Stellmechanik 4 unterscheiden, wohingegen für alle Bauformen der gleiche Stellmotor 3 herangezogen wird.

In einer beispielhaften Ausführung umfasst die Baureihe vier Bauformen des Fensterhebers 1, deren jeweilige Stellmechanik 4 wie folgt ausgelegt ist:

Tab.1

| Bauformbezeichnung | Maximallastmoment $M_L$ der Stellmechanik 4 | Maximaldrehzahl $n_m$ der Stellmechanik 4 |
|---|---|---|
| Typ A | 8 Nm | 80 Us$^{-1}$ |
| Typ B | 10 Nm | 80 Us$^{-1}$ |
| Typ C | 12 Nm | 78 Us$^{-1}$ |
| Typ D | 14 Nm | 78 Us$^{-1}$ |

Der für alle Bauformen der Baureihe gleiche Stellmotor 3 ist wie folgt ausgelegt:

- Blockmoment $D_B$ bei Maximalbetriebsspannung von 16 V: 20 Nm
- Leerlaufdrehzahl $n_L$ bei Maximalbetriebsspannung von 16 V: 120 Us$^{-1}$
- Zulässige Maximaldrehzahl: 80 Us$^{-1}$

Hinsichtlich seiner elektrischen Leistungsfähigkeit ist der Stellmotor 3 somit in Hinblick auf die mechanische Auslegung der jeweiligen Stellmechanik 4 aller Bauformen der Baureihe überdimensioniert. Des Weiteren ist der Stellmotor 3 hinsichtlich seiner elektrischen Leistungsfähigkeit auch gegenüber seiner eigenen mechanischen Auslegung überdimensioniert.

Der Drehmomentgrenzwert $D_G$ (oder, falls der Drehmomentgrenzwert $D_G$ als stellpositionsabhängige Funktion definiert ist, dessen Maximalwert $D_{Gm}$) und der Drehzahlsollwert $n_S$ sind für die einzelnen Bauformen wie folgt festgelegt:

Tab. 2

| Bauformbezeichnung | Drehmomentgrenzwert $D_G$ bzw. Maximalwert $D_{Gm}$ | Drehzahlsollwert $n_S$ |
|---|---|---|
| Typ A | 7,5 Nm | 60 Us$^{-1}$ |
| Typ B | 9,5 Nm | 60 Us$^{-1}$ |
| Typ C | 11 Nm | 60 Us$^{-1}$ |
| Typ D | 13 Nm | 60 Us$^{-1}$ |

Somit wird bei allen Bauformen eine Überbelastung der jeweiligen Stellmechanik 4 oder des Stellmotors 3 ausgeschlossen.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

Bezugszeichenliste

| 1 | (Seilzug-)Fensterheber | $n$ | (Motor-)Drehzahl |
|---|---|---|---|
| 2 | (Fahrzeug-)Fensterscheibe | $n_m$ | Maximaldrehzahl |
| 3 | Stellmotor | $n_L$ | Leerlaufdrehzahl |
| 4 | Stellmechanik | $n_S$ | (Drehzahl-)Sollwert |
| 5 | Verstellweg | X | Stell position |
| 6 | Öffnungsstellung | A | Arbeitspunktlinie |
| 7 | Schließstellung | D | (Motor-)Drehmoment |
| 8 | Motorwelle | $D_B$ | Blockmoment |
| 9 | Antriebsschnecke | $D_G$ | (Drehmoment-)Grenzwert |
| 10 | Schneckenrad | $D_{Gm}$ | Maximalwert |

(fortgesetzt)

| | | | | |
|---|---|---|---|---|
| 11 | Seilzug | $D_u$ | Überschusskraft |
| 12 | Steuereinheit | F | (Gesamt-)Stellsignal |
| 13 | Drehstellungssensor | $F_n$ | Stellsignal |
| 14 | Stromsensor | $F_D$ | Stellsignal |
| 15 | Ringmagnet | $I_M$ | Motorstrom |
| 16 | Hall-Sensor | K | (Drehzahl-Drehmoment-)Kennlinie |
| 20 | PWM-Schaltmodul | | |
| 21 | Regelkreis | $K_1$ | Verlauf |
| 22 | Frequenzregelzweig | $K_2$ | Verlauf |
| 23 | Drehmomentbegrenzungszweig | $K_3$ | Verlauf |
| | | $M_L$ | Maximallastmoment |
| 24 | Differenzglied | P | Regelparameter |
| 25 | PI-Regler | $S_n$ | Drehzahlmesssignal |
| 26 | Differenzglied | $S_I$ | Strommesssignal |
| 27 | Filtermodul | $U_B$ | Batteriespannung |
| 28 | P-Regler | $U_M$ | Motorspannung |
| 29 | Multiplikationsglied | | |
| $\Delta n$ | Differenzsignal | | |
| $\Delta D$ | Differenzsignal | | |
| $\Delta D^+$ | Differenzsignal | | |

**Patentansprüche**

1. Stellvorrichtung (1) für ein bewegbares Fahrzeugteil (2), mit einem elektrischen Stellmotor (3), mit einer abtriebsseitig mit dem Stellmotor (3) gekoppelten Stellmechanik (4) und mit einer Steuereinheit (12) zur Ansteuerung des Stellmotors (3) mit einem Motorstrom ($I_M$), wobei die Steuereinheit (12) dazu eingerichtet ist, die Motordrehzahl (n) des Stellmotors (3) durch Regelung der Motorspannung ($U_M$) auf einen Drehzahlsollwert ($n_S$) zu regeln, **dadurch gekennzeichnet,**

   • **dass** die Steuereinheit (12) zusätzlich dazu eingerichtet ist, das Motordrehmoment (D) des Stellmotors (3) durch Begrenzung des Motorstroms ($I_M$) auf einen Drehmomentgrenzwert ($D_G$) zu begrenzen,
   • **dass** die Steuereinheit (12) ein PWM-Schaltmodul (20) sowie einen Regelkreis (21) zur Ansteuerung des PWM-Schaltmoduls (20) aufweist, wobei der Regelkreis (21) einen Frequenzregelzweig (22) mit einem Proportional-Integral-Regler (25) und einen Drehmomentbegrenzungszweig (23) mit einem Proportionalregler (28) umfasst,
   • **dass** dem Proportional-Integral-Regler (25) des Frequenzregelzweiges (22) ein erstes Differenzsignal ($\Delta n$) zugeführt ist, das proportional zu der Differenz des Drehzahlsollwerts ($n_S$) von der Motordrehzahl (n) ist,
   • **dass** dem Proportionalregler (28) des Drehmomentbegrenzungszweigs (23) ein zweites Differenzsignal ($\Delta D^+$) zugeführt ist, das proportional zu der Differenz des Drehmomentgrenzwerts ($D_G$) von dem Motordrehmoment (D) ist, wenn der aktuelle Istwert des Motordrehmoments (D) den Drehmomentgrenzwert ($D_G$) übersteigt, und das ansonsten den Wert Null hat,
   • **dass** ein von dem Proportional-Integral-Regler (25) des Frequenzregelzweiges (22) ausgegebenes erstes Stellsignal ($F_n$) und ein ein von dem Proportionalregler (28) des Drehmomentbegrenzungszweigs (23) ausgegebenes zweites Stellsignal ($F_D$) in einem Multiplikationsglied (29) multipliziert werden, wobei das Stellsignal ($F_D$) den Wert 1 hat, wenn das Differenzsignal ($\Delta D^+$) den Wert 0 hat und mit zunehmendem Wert des Differenzsignals ($\Delta D^+$) von dem Wert 1 bis auf den Wert 0 absinkt, und
   • **dass** ein hieraus resultierendes Gesamt-Stellsignal (F) dem PWM-Schaltmodul (20) zugeführt ist,

   um unzulässige Arbeitspunkte des Stellmotors, die aufgrund zu hoher Motordrehmomente oder Motordrehzahlen zu einer sofortigen oder allmählichen Schädigung der Stellmechanik führen würden, auszuschließen.

2. Stellvorrichtung (1) nach Anspruch 1, **dadurch gekennzeichnet,**

**dass** der Stellmotor (3) derart ausgelegt ist, dass er bei kontinuierlicher Ansteuerung mit einer Maximalbetriebsspannung ein Blockdrehmoment $(D_B)$ aufweist, das ein Maximallastmoment $(M_L)$ der Stellmechanik (4) überschreitet.

3. Stellvorrichtung (1) nach Anspruch 2,
**dadurch gekennzeichnet,**
**dass** der Steuereinheit (12) der Drehmomentgrenzwert $(D_G)$ derart vorgegeben ist, dass er das Maximallastmoment $(M_L)$ der Stellmechanik (4) nicht überschreitet.

4. Stellvorrichtung (1) nach Anspruch 3,
**dadurch gekennzeichnet,**
**dass** der Drehmomentgrenzwert $(D_G)$ variabel als Funktion eines Stellpositionsmaßes (x) oder als Funktion der Zeit vorgegeben ist.

5. Stellvorrichtung (1) nach einem der Ansprüche 1 bis 4,
**dadurch gekennzeichnet,**
**dass** der Stellmotor (3) derart ausgelegt ist, dass er bei kontinuierlicher Ansteuerung mit einer Maximalbetriebsspannung eine Leerlaufdrehzahl $(n_L)$ aufweist, die eine Maximaldrehzahl des Stellmotors (3) oder eine Maximaldrehzahl $(n_m)$ der Stellmechanik (4) überschreitet.

6. Stellvorrichtung (1) nach Anspruch 5,
**dadurch gekennzeichnet,**
**dass** der Steuereinheit (12) der Drehzahlsollwert $(n_S)$ derart vorgegeben ist, dass er die Maximaldrehzahl $(n_m)$ des Stellmotors (3) oder die Maximaldrehzahl $(n_m)$ der Stellmechanik (4) nicht überschreitet.

7. Stellvorrichtung (1) nach einem der Ansprüche 1 bis 6,
**dadurch gekennzeichnet,**
**dass** die Steuereinheit (12) dazu eingerichtet ist, sowohl zur Begrenzung des Motordrehmoments (D) als auch zur Regelung der Motordrehzahl (n) die Motorspannung $(U_M)$ als pulsweitenmoduliertes Pulssignal zu erzeugen.

8. Stellvorrichtung (1) nach einem der Ansprüche 1 bis 7,
**dadurch gekennzeichnet,**
**dass** die Steuereinheit (12) in einem Motorgehäuse des Stellmotors (3) integriert ist.

**Claims**

1. Actuating device (1) for a moveable vehicle part (2), having an electric servomotor (3), having an actuating mechanism (4) coupled with the servomotor (3) on the output side and having a control unit (12) for controlling the servomotor (3) having a motor current $(I_M)$, wherein the control unit (12) is set up to regulate the motor rotational speed (n) of the servomotor (3) by regulating the motor voltage $(U_M)$ to a desired rotational speed value $(n_s)$,
**characterised in that**

- the control unit (12) is additionally set up to limit the motor torque (D) of the servomotor (3) by limiting the motor current $(I_M)$ to a torque threshold value $(D_G)$,
- the control unit (12) has a PWM switching module (20) as well as a control circuit (21) for controlling the PWM switching module (20), wherein the control circuit (21) comprises a frequency regulating branch (22) having a proportional-integral regulator (25) and a torque limiting branch (23) having a proportional regulator (28),
- a first difference signal $(\Delta n)$ is supplied to the proportional-integral regulator (25) of the frequency regulating branch (22), said difference signal $(\Delta n)$ being proportional to the difference of the desired rotational speed value $(n_s)$ from the motor rotational speed (n),
- a second difference signal $(\Delta D^+)$ is supplied to the proportional regulator (28) of the torque limiting branch (23), said difference signal $(\Delta D^+)$ being proportional to the difference of the torque threshold value $(D_G)$ from the motor torque (D) when the current actual value of the motor torque (D) exceeds the torque threshold value $(D_G)$ and otherwise having the value of zero,
- a first actuating signal $(F_n)$ emitted by the proportional-integral regulator (25) of the frequency regulating branch (22) and a second actuating signal $(F_D)$ emitted by the proportional regulator (28) of the torque limiting branch (23) are multiplied in a multiplication member (29), wherein the actuating signal $(F_D)$ has the value 1 when the difference signal $(\Delta D^+)$ has the value 0 and decreases with increasing value of the difference signal $(\Delta D^+)$ from

the value 1 to the value 0, and

• a total actuating signal (F) resulting from this is supplied to the PWM switching module (20),

in order to preclude inadmissible work points of the servomotor, which would lead to immediate or gradual damage to the actuating mechanism because of high motor torque or motor rotational speed.

2. Actuating device (1) according to claim 1,
**characterised in that**
the servomotor (3) is designed in such a way that it has a blocking torque ($D_B$) with continuous control with a maximum operating voltage, said blocking torque ($D_B$) exceeding a maximum load torque ($M_L$) of the actuating mechanism (4).

3. Actuating device (1) according to claim 2,
**characterised in that**
the control unit (12) of the torque threshold value ($D_G$) is predetermined in such a way that it does not exceed the maximum load torque ($M_L$) of the actuating mechanism (4).

4. Actuating device (1) according to claim 3,
**characterised in that**
the torque threshold value ($D_G$) is variably predetermined as a function of an actuating positional level (x) or as a function of the time.

5. Actuating device (1) according to one of claims 1 to 4,
**characterised in that**
the servomotor (3) is designed in such a way that it has an idle rotational speed ($n_L$) with continuous control with a maximum operating voltage, said idle rotational speed ($n_L$) exceeding a maximum rotational speed of the servomotor (3) or a maximum rotational speed ($n_m$) of the actuating mechanism (4).

6. Actuating device (1) according to claim 5,
**characterised in that**
the control unit (12) of the desired rotational speed value ($n_S$) is predetermined in such a way that it does not exceed the maximum rotational speed ($n_m$) of the servomotor (3) or the maximum rotational speed ($n_m$) of the actuating mechanism (4).

7. Actuating device (1) according to one of claims 1 to 6,
**characterised in that**
the control unit (12) is set up to generate the motor voltage ($U_M$) as a pulse-width modulated pulse signal, both for limiting the motor rotational speed (D) and for regulating the motor rotational speed (n).

8. Actuating device (1) according to one of claims 1 to 7,
**characterised in that**
the control unit (12) is integrated in a motor housing of the servomotor (3).

**Revendications**

1. Dispositif de réglage (1) pour une partie de véhicule (2) mobile, comprenant un moteur de réglage électrique (3), un mécanisme de réglage (4) couplé côté entraînement au moteur de réglage (3) et une unité de commande (12) pour commander le moteur de réglage (3) avec un courant moteur ($I_M$), l'unité de commande (12) étant conçue pour régler la vitesse de rotation (n) du moteur de réglage (3) à une valeur de consigne de la vitesse de rotation ($n_S$) en régulant la tension moteur ($U_M$),
**caractérisé**

- **en ce que** l'unité de commande (12) est en outre conçue pour limiter le couple moteur (D) du moteur de réglage (3) en limitant le courant moteur ($I_M$) à une valeur limite de couple ($D_G$),
- **en ce que** l'unité de commande (12) présente un module de commutation PWM (20) ainsi qu'une boucle de commande (21) pour la commande du module de commutation PWM (20), la boucle de commande (21) comprenant une branche de régulation de fréquence (22) avec un régulateur proportionnel-intégral (25) et une branche de limitation du couple (23) avec un régulateur proportionnel (28),

- **en ce qu'**un premier signal de différence ($\Delta n$), proportionnel à la différence entre la valeur de consigne de vitesse de rotation ($n_s$) et la vitesse de rotation du moteur (n), est envoyé au régulateur proportionnel-intégral (25) de la branche de régulation de fréquence (22),

- **en ce qu'**un deuxième signal de différence ($\Delta D^+$) est envoyé au régulateur proportionnel (28) de la branche de limitation de couple (23), lequel deuxième signal est proportionnel à la différence entre la valeur limite de couple ($D_G$) et le couple moteur (D) lorsque la valeur réelle actuelle du couple moteur (D) dépasse la valeur limite de couple ($D_G$) et qui a autrement la valeur zéro,

- **en ce qu'**un premier signal de réglage ($F_n$) délivré par le régulateur proportionnel-intégral (25) de la branche de régulation de fréquence (22) et un deuxième signal de réglage ($F_D$) délivré par le régulateur proportionnel (28) de la branche de limitation de couple (23) sont multipliés dans un élément multiplicateur (29), le signal de réglage ($F_D$) ayant la valeur 1 lorsque le signal de différence ($\Delta D^+$) a la valeur 0 et diminue de la valeur 1 à la valeur 0 avec l'augmentation de la valeur du signal de différence ($\Delta D^+$), et

- **en ce qu'**un signal de réglage total (F) qui en résulte est envoyé au module de commutation PWM (20)

afin d'exclure des points de fonctionnement non admis du moteur de réglage qui entraîneraient un endommagement immédiat ou progressif du mécanisme de réglage en raison de couples ou de vitesses moteur trop élevés.

2. Dispositif de réglage (1) selon la revendication 1,
   **caractérisé**
   **en ce que** le moteur de réglage (3) est conçu de telle sorte que, lorsqu'il est commandé en continu avec une tension de fonctionnement maximale, il présente un couple de blocage (DB) qui dépasse un couple de charge maximal (ML) du mécanisme de réglage (4).

3. Dispositif de réglage (1) selon la revendication 2,
   **caractérisé**
   **en ce que** la valeur limite de couple ($D_G$) est imposée à l'unité de commande (12) de telle manière qu'elle ne dépasse pas le couple de charge maximal ($M_L$) du mécanisme de réglage (4).

4. Dispositif de réglage (1) selon la revendication 3,
   **caractérisé**
   **en ce que** la valeur limite de couple ($D_G$) est imposée de manière variable en tant que fonction d'une dimension de position de réglage (x) ou en tant que fonction du temps.

5. Dispositif de réglage (1) selon l'une des revendications 1 à 4,
   **caractérisé**
   **en ce que** le moteur de réglage (3) est conçu de telle sorte que, lorsqu'il est commandé en continu avec une tension de fonctionnement maximale, il présente une vitesse de ralenti ($n_L$) qui dépasse une vitesse de rotation maximale du moteur de réglage (3) ou une vitesse de rotation maximale ($n_m$) du mécanisme de réglage (4).

6. Dispositif de réglage (1) selon la revendication 5,
   **caractérisé**
   **en ce que** la valeur de consigne de la vitesse de rotation ($n_s$) est imposée à l'unité de commande (12) de telle sorte qu'elle ne dépasse pas la vitesse de rotation maximale ($n_m$) du moteur de réglage (3) ou la vitesse de rotation maximale ($n_m$) du mécanisme de réglage (4).

7. Dispositif de réglage (1) selon l'une des revendications 1 à 6,
   **caractérisé**
   **en ce que** l'unité de commande (12) est conçue pour générer la tension du moteur ($U_M$) en tant que signal d'impulsion modulé en largeur d'impulsion, tant pour limiter le couple moteur (D) que pour réguler la vitesse de rotation du moteur (n).

8. Dispositif de réglage (1) selon l'une des revendications 1 à 7,
   **caractérisé**
   **en ce que** l'unité de commande (12) est intégrée dans un carter de moteur du moteur de réglage (3).

**FIG. 1**

**FIG. 2**

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19711979 A1
- DE 19823376 A1
- DE 19615581 A1
- DE 3731469